# EUROPEAN PATENT SPECIFICATION

(11) **EP 0 738 828 B1**
(45) Date of publication and mention of the grant of the patent: **28.02.2001**
(21) Application number: 96106038.1
(22) Date of filing: 17.04.1996
(51) Int. Cl.: F02D 13/02

(54) **Internal combustion engine having a throttle valve in an exhaust gas passage**
Brennkraftmaschine mit Drosselklappe in einem Abgaskanal
Moteur à combustion interne avec une soupape d'étranglement disposée dans un canal passage d'échappement

(30) Priority: 17.04.1995 JP 11510995
(43) Date of publication of application: 23.10.1996
(73) Proprietor: YAMAHA HATSUDOKI KABUSHIKI KAISHA, Iwata-shi Shizuoka-ken, 438 (JP)
(72) Inventor: Masuda, Tatsuyuki, Iwata-shi, Shizuoka-ken (JP)
(74) Representative: Grünecker, Kinkeldey, Stockmair & Schwanhäusser Anwaltssozietät

(56) References cited:
- EP-A- 0 205 415
- EP-A- 0 479 342
- EP-A- 0 578 373
- EP-A- 0 603 914
- US-A- 4 388 894
- US-A- 4 766 854
- US-A- 4 805 571

## Description

This invention relates to an internal combustion engine comprising at least one combustion chamber within an engine body, at least one exhaust gas passage for leading out exhaust gas from the combustion chamber and a control valve accommodated in a housing for controlling an exhaust gas flow and being a butterfly valve provided with a valve shaft, said housing having an exhaust gas hole being operable by said butterfly valve, and to an internal combustion engine comprising at least one combustion chamber within an engine body, at least one exhaust gas passage for leading out exhaust gas from the combustion chamber and at least one sub-exhaust gas passage for leading out exhaust gas from the combustion chamber earlier than said exhaust gas passage and a control valve disposed within said sub-exhaust gas passage for controlling the exhaust gas flow.

Such an internal combustion engine according to the above-mentioned first alternative is known from EP-A-479 342 or US-A-4 805 571, respectively. However, this internal combustion engine has problems as will be discussed with respect to a motorcycle engine.

A controller for this motorcycle engine has been proposed in view of improving output or ease of starting. That is, a cylindrical exhaust valve is disposed in the middle of an exhaust gas passage which draws out exhaust gas from a combustion chamber. The cylindrical exhaust valve crosses and penetrates at least part of the exhaust gas passage to make the cross-sectional area of the exhaust gas passage variable. When a decompression device is provided, this is also operating as an exhaust gas passage, because during an exhaust stroke, exhaust gas from the combustion chamber flows into this device.

In such a motorcycle, a driving motor for rotating the exhaust valve is typically disposed apart from the exhaust valve, for instance near the steering device, and the power of the driving motor is transmitted through a wire or the like to rotate the exhaust valve.

By the way, during operation of an engine, a tar-like substance or carbon produced by oxidation of fuel may enter a small gap between the valve portion of the cylindrical exhaust valve and an inside cylindrical surface of a bore in an exhaust gas passage wall through which the valve portion penetrates. When the engine stops, the tar-like substance or the carbon solidifies and may cause the exhaust valve to stick and become inoperative. To solve this problem, it has been practiced to operate the exhaust valve before starting the engine or after stopping the engine to scrape out the tar-like substance or carbon which has solidified in the gap between the valve portion of the exhaust valve and the inside cylindrical surface of the bore in the exhaust gas passage wall.

As described above, since the tar-like substance or carbon in the gap between the valve portion of the exhaust valve and the inside cylindrical surface of the bore in the exhaust gas passage wall is scraped out before starting the engine or after stopping the engine by rotating the exhaust valve, the tar-like substance or carbon may collect unless the exhaust valve is operated by a large stroke during operation of the engine, especially during high speed, high load operation, and poses a threat of the exhaust valve sticking.

Accordingly, it is an objective of the present invention to provide an internal combustion engine which is capable to always ensure a reliable operation of said control valve and simultaneously facilitates the assembly and maintenance of said valve.

According to the present invention, this objective is solved for an internal combustion engine as indicated above in that said housing is disposed within said exhaust gas passage and within said engine body and that the material of said housing is different to the material of said engine body.

Thereby it is advantageous when said housing being composed of iron, iron based alloy or copper based alloy, respectively, and that said engine body being composed of aluminium alloy.

In order to further reduce the area within said butterfly valve where sticking may occur, it is advantageous when the height of said exhaust gas hole is smaller than the overall height of said butterfly valve and that the thickness of a butterfly portion of said butterfly valve is smaller than the diameter of said valve shaft.

In case the internal combustion engine comprises at least two cylinder bores arranged in a line and having respective combustion chambers which communicate with respective exhaust gas passages, it is advantageous when each of said exhaust passages are provided with a respective housing accommodating the respective butterfly valve and that joint covers are provided between respective housings or when a single housing is provided accommodating respective butterfly valves.

According to another embodiment of the invention, said butterfly valve or said butterfly valves, respectively, being controllable by an exhaust gas controller.

Other preferred embodiments of the present invention are laid down in further dependent claims.

According to an advantageous embodiment of the invention, the housing is disposed in the middle of the exhaust passage allowing exhaust gas to flow out from the combustion chamber, and the butterfly valve for varying the cross-sectional area of passage is disposed in the exhaust hole in the housing. Therefore, tar-like substance or carbon does not stick between the external surface of the butterfly valve for varying the cross-sectional area of passage and the housing. Furthermore, since the shaft for supporting the butterfly valve for varying the cross-sectional area of the exhaust gas passage is rotatably supported on the housing and made small in diameter, its rotary drive torque is small, preventing the butterfly valve from being stuck with the tar-like substance or carbon, and permitting accurate drive of the valve.

This invention is applicable to either a two-stroke cycle engine with a variable compression ratio control in its exhaust gas passage, a two or four-stroke cycle engine with control of resistance, length, volume, or branching off its exhaust gas passage, or to a similar type of engine with a decompression device, and more specifically to an engine provided with an exhaust gas controller capable of accurately driving a valve disposed in an exhaust gas passage.

In the following, the present invention is explained in greater detail with respect to several embodiments thereof in conjunction with the accompanying drawings, wherein:
FIG. 1 shows a cross section of an engine provided with an exhaust gas controller;
FIGs. 2a and 2b show a butterfly valve for varying the cross-sectional area of passage disposed in a cylinder body;
FIG. 3 shows a cross section taken along the line III-III in FIG. 2a
FIG. 4 is a perspective view of a housing and the butterfly valve for varying the cross-sectional area of passage;
FIG. 5 shows a cross section of the cylinder body;
FIG. 6 shows a cross section taken along the line VI-VI in FIG. 5;
FIG. 7 shows a housing and a valve unit of the butterfly valve for varying the cross-sectional area of passage;
FIG. 8 shows a cross section taken along the line VIII-VIII in FIG. 6;
FIG. 9 shows another embodiment of the housing and the valve unit of the butterfly valve for varying the cross-sectional area of passage;
FIG. 10 shows a cross section taken along the line X-X in FIG. 9, and
FIG. 11 shows an enlarged cross-sectional view of the butterfly valve in figure 3.

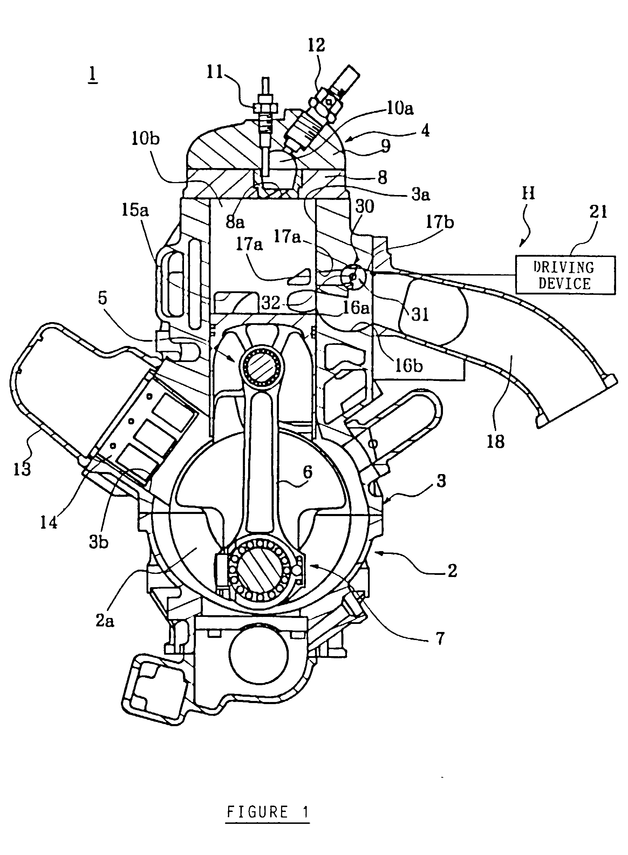

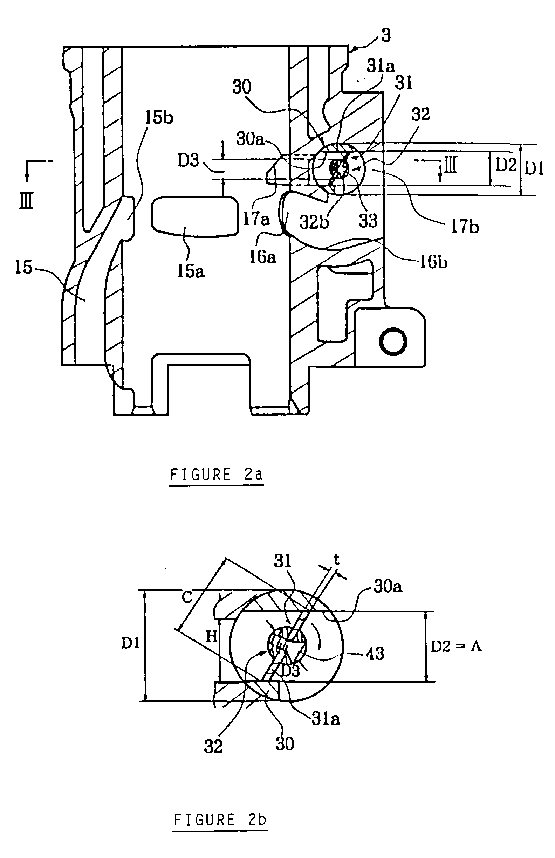

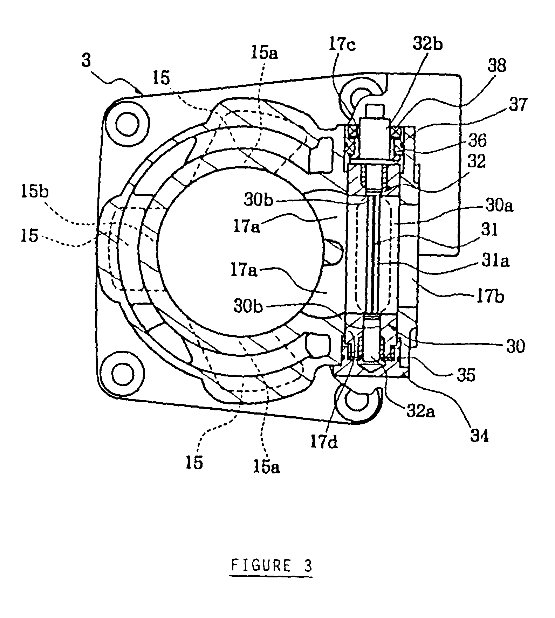

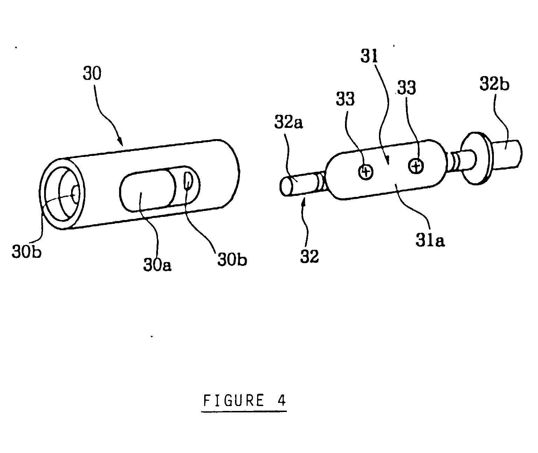

An embodiment of an engine provided with an exhaust gas control of this invention will be described in reference to the appended drawings. FIG. 1 shows a cross section of an engine provided with an exhaust gas controller. FIGs. 2a and 2b show a butterfly valve provided on the cylinder body for varying the cross-sectional area of passage. FIG. 3 shows a cross section taken along the line III-III in FIG. 2a. FIG. 4 is a perspective view of the housing and the butterfly valve.

An engine 1 is a two cycle, single cylinder, Diesel engine, comprising a crankcase 2 , a cylinder body 3 and a cylinder head 4 stacked on and connected to the crankcase 2 , a piston 5 freely slidably inserted in a bore 3a of the cylinder body 3 and connected through a connecting rod 6 to a crankshaft 7 in the crankcase 2 .

The cylinder head 4 is of a two-piece split structure made up with a lower head 8 and an upper head 9 , with a sub-combustion chamber 10a formed in the boundary area between the two components. The sub-combustion chamber 10a communicates through a small diameter passage 8a with a main combustion chamber 10b of the cylinder bore 3a . Tips of a glow plug 11 for starting ignition and a fuel injection valve 12 face the sub-combustion chamber 10a .

The crankcase 2 and the cylinder body 3 form a crank chamber 2a . The cylinder body 3 is formed with an intake opening 3b communicating with the crank chamber 2a . The intake opening 3b is connected to an intake duct 13 . The intake opening 3b is provided with a reed valve 14 for controlling intake timing and preventing reverse flow.

At about middle height of the cylinder body 3 are provided two first scavenging ports 15a, 15a and a second scavenging port 15b , each connected through a scavenging passage 15 to the crank chamber 2a. A main exhaust port 16a is formed in the upper part of the cylinder body 3 . The main exhaust port 16a is connected to a main exhaust passage 16b which leads out to the outside wall of the cylinder. A pair of sub-exhaust ports 17a, 17a , apart from each other in the circumferential direction, are formed slightly above (in the cylinder bore axis direction) the main exhaust passage 16b. A sub-exhaust passage 17b connected to the sub-exhaust ports 17a joins at its downstream side to the main exhaust passage 16b and leads to the outside through an exhaust duct 18 .

Although it is still possible to provide a single or the main exhaust gas passage 16b with a respective exhaust gas control valve, in this embodiment a housing 30 , a separate component from the cylinder body 3 , is disposed in the middle of the sub-exhaust passage 17b which draws out exhaust gas from the main combustion chamber 10b formed by the combustion chamber wall of the cylinder body 3 . The housing 30 is formed with a through exhaust gas hole 30a having about the same cross section as that of the sub-exhaust passage 17b and communicating with the sub-exhaust passage 17b . A butterfly valve 31 for varying the cross-sectional area of passage is disposed in the exhaust gas hole 30a in the housing 30 and supported for free rotation by a shaft 32 on the housing 30 . The butterfly valve 31 for varying the cross-sectional area of passage is driven to rotate by a driving device 21 . The above components constitute an exhaust gas controller. The cylinder body 3 is made of aluminum alloy. The housing 30 and the shaft 32 are made of iron, iron-based alloy, or copper-based alloy. A butterfly 31a of the butterfly valve 31 is made of aluminum alloy, iron, iron-based alloy, or copper-based alloy. The outside diameter D1 of the housing 30 is, as shown in FIGs. 2a and 2b is greater than the inside diameter D2 of the exhaust gas hole 30a of the housing 30 . The diameter D3 of the shaft 32 is smaller than the inside diameter D2 of the exhaust gas hole 30a .

To assemble the housing 30 , butterfly valve 31 for varying the cross-sectional area of passage, and the shaft 32 , the shaft 32 is inserted into a shaft hole 30b of the housing 30 , and the butterfly valve 31 for varying the cross-sectional area of passage is secured with a screw 33 to the shaft 32 to constitute a valve unit. The valve unit is inserted into installation holes 17c, 17d formed through the sub-exhaust passage 17b . One end 32a of the shaft 32 of the butterfly valve 31 for varying the cross-sectional area of passage is fitted with a cap 34 . The cap (34) is provided with an O-ring 35 for sealing. The other (base) end 32b of the shaft 32 is connected to a drive device 21 which drives the shaft 32 to rotate.

As described above, the housing 30 is disposed in the middle of the sub-exhaust gas passage 17b which draws out exhaust gas from the main combustion chamber 10b , and the butterfly valve 31 for varying the cross-sectional area of passage is disposed in the exhaust gas hole 30a of the housing 30. As shown in FIG. 2 b , the height A of the exhaust gas hole 30a of the housing 30 is equal to the inside diameter D2 , and the height A is about the same as the height H of the sub-exhaust gas passage 17b . Furthermore, the height A is smaller than the outside diameter D1 and also smaller than the overall height C of the butterfly portion or the valve body of the butterfly valve 31 for varying the cross-sectional area of passage. The thickness t of the butterfly portion or the valve body of the butterfly valve 31 for varying the cross-sectional area of passage is smaller than the outside diameter D3 of the valve shaft 32 . Thus, the outside surface of the butterfly can be kept off contact from the contact position with the housing 30 unless the butterfly valve 31 for varying the cross-sectional area of passage is completely closed. In particular in engines in which the butterfly valve 31 for varying the cross-sectional area of passage is not completely closed under a full load or at high speeds in order to lower the compression ratio in comparison with that under a low load or at low speeds, the amount of exhaust gas increases because of the full load or high speed operation. Accordingly the amount of tar passing the butterfly valve 31 for varying the cross-sectional area of passage increases. The full load or high speed operation also raises the temperature of the exhaust gas passage and is likely to produce carbon from the tar-like substance. Even in such a situation, the circumference of the butterfly 31a can be kept off contact with the housing 30 so that the tar-like substance does not remain at the contact poiition between the butterfly circumference and the housing 30 . Therefore, even if the butterfly valve 31 for varying the cross-sectional area of passage is operated and the engine is stopped so that the butterfly circumference comes into contact with the housing 30 , the tar-like substance does not cause the butterfly circumference to stick to the housing 30 . Even if the tar-like substance causes the butterfly circumference to stick to the housing 30 , since the thickness t of the butterfly portion is smaller than the outside diameter D3 of the valve shaft 32 , sticking area is small and the total force of sticking is small.

On the other hand, the conventional arrangement has no housing 30 and the valve body is of a cylindrical shape. Therefore, the cylindrical outer shape of the valve body is always adjacent to the exhaust gas passage of a cylindrical shape. Therefore, there is always a concern that tar-like substance or carbon may enter the space between the two components and cause sticking. Furthermore, in the state of the valve being fully closed, since the cylindrical contact surface area between the valve body and the exhaust passage is large, a large sticking force is produced.

Since the housing 30 , as described before, is made of iron, iron alloy, or copper alloy having higher resistance against abrasion, strength at high temperatures and yielding at high temperatures, the housing 30 will not be deformed by repeated contacts by the butterfly 31a . Even if the housing 30 is deformed, the cylinder body 3 need not be replaced but the housing 30 only has to be replaced, reducing the maintenance cost. Furthermore, even if the butterfly 31a is deformed, since it is a small component, replacement requires little cost. Since the housing 30 , as described before, is made of iron, iron alloy, or copper alloy having higher resistance against abrasion, strength at high temperatures and yielding at high temperatures, the housing 30 is not likely to be worn or deformed by the rotation of the valve shaft 32 for an extended period of time. Even if the housing 30 is worn or deformed, replacement requires only a small cost.

Since the shaft 32 for supporting the butterfly valve 31 for varying the cross-sectional area of passage is freely rotatably supported by the housing 30 and the diameter of the shaft 32 is made small, the rotary drive torque of the butterfly valve 31 for varying the cross-sectional area of passage is small. Even if tar-like substance or carbon enters between rotating surfaces, sticking torque caused by the tar-like substance or carbon is small because the circumferential length of the shaft is small and the sticking force is accordingly small. Even if the tar-like substance or carbon sticks to the butterfly valve 31 for varying the cross-sectional area of passage, opening and closing operation of the butterfly valve 31 for varying the cross-sectional area of passage is not affected. Therefore, sticking is prevented and the valve is driven accurately.

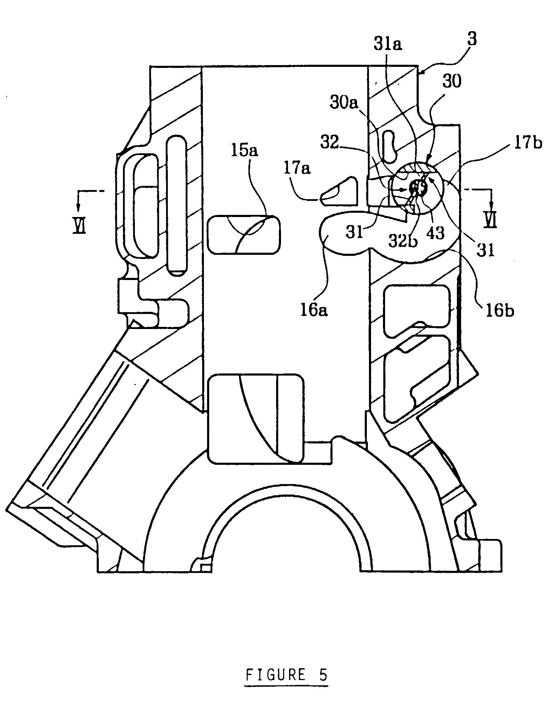

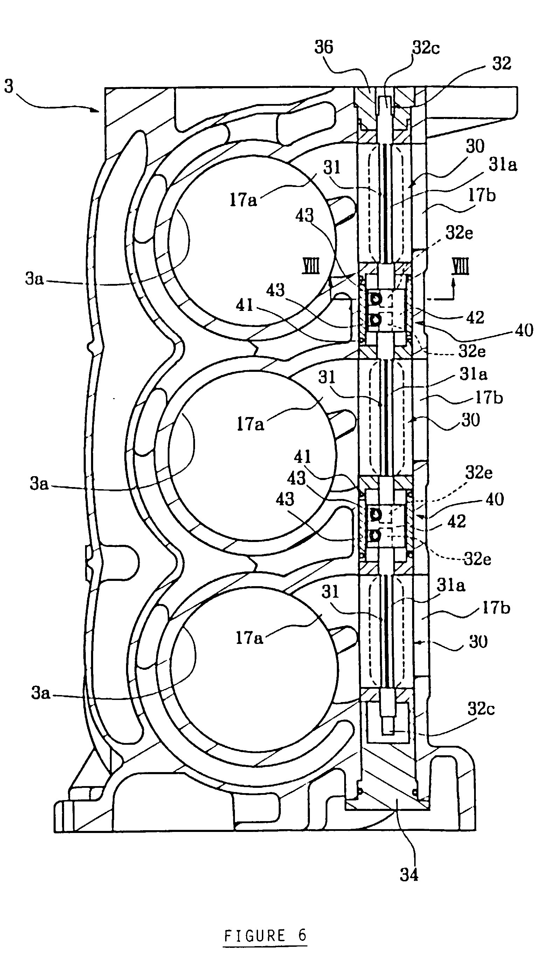

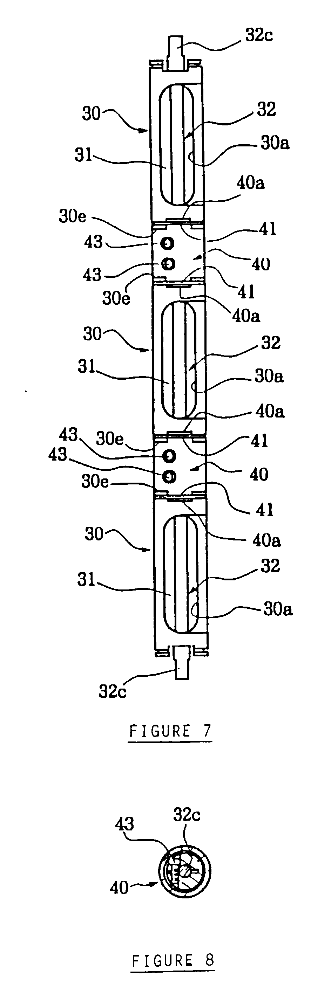

FIGs. 5 through 8 show another embodiment of this invention. FIG. 5 shows a cross section of a cylinder body. FIG. 6 shows a cross section taken along the line VI-VI in FIG. 5. FIG. 7 shows a housing and a butterfly valve for varying the cross-sectional area of passage. FIG. 8 shows a cross section taken along the line VIII-VIII in FIG. 6.

An engine 1 is a two cycle, three cylinder, Diesel engine. Since each cylinder is constituted in the same manner as described above, the same symbols are provided to like parts and the description is omitted.

In this embodiment, three housings 30 are disposed to penetrate the three sub-exhaust gas passages 17b of the three cylinders. Joint covers 40 are provided between the adjacent housings 30 . Both ends 30e of each housing 30 and both ends 40a of each joint cover 40 are formed with mutually complementary recesses and projections so that one end 40a of a joint cover 40 engages with one end 30e of a housing 30. Adjacent components are stopped by a snap ring 41 to prevent them from coming off each other.

The butterfly valve 31 for varying the cross-sectional area of passage is disposed in the exhaust gas hole 30a in each housing 30 . Adjacent ends 32e, of the shaft 32 of the butterfly valve 31 for varying the cross-sectional area of passage are made to face each other and placed in contact with a joint member 42 which is secured with a screw 43 so that the adjacent shafts 32 are connected and secured by tightening.

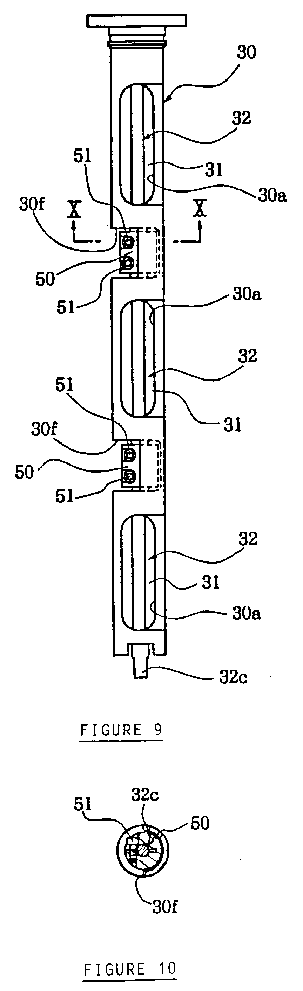

In multicylinder engines such as the one described above, an arrangement may made as shown in FIGs. 9 and 10 in which a single housing 30 is used to extend over a plural number of sub-exhaust gas passages 17b and the butterfly valves 31 for varying the cross-sectional area of passage are supported by three shafts 32 in the same manner as shown in FIG. 6. In that case, shaft support members 50 are disposed between adjacent butterfly valves 31 for varying the cross-sectional area of passage by inserting the shaft support members 50 through openings 30f of the housing 30 and securing with a screws 51 so that three shafts 32 smoothly work in a body. The three shafts 32 may also be formed as a single shaft. In that case, the openings 30f and the screws 51 are unnecessary.

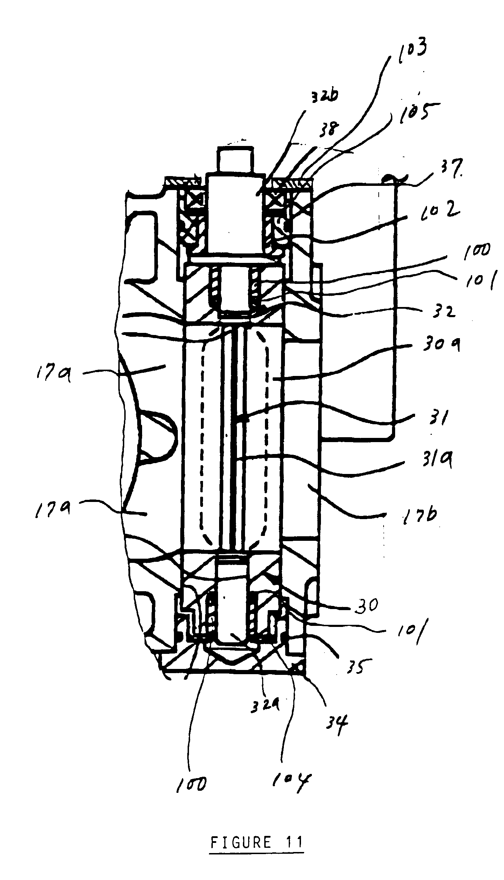

Figure 11 shows another embodiment of the invention which is similar to those embodiments already described. Where this embodiment is the same as those previously described embodiments, common components have been indicated by like reference numerals and will not be described again. This embodiment has the advantage of using some common parts and it will be seen that the valve assembly is placed into the engine through a bore which is counterbored at its opposite end so as to receive a pair of dry bushings 100 which journal the shaft portions 32a. Carbon sealing rings 101 are provided at the ends of the dry bushings 100 for sealing purposes.

At that end 32b where the valve shaft 32 is connected to the servo motor, it is supported by a further bushing 102 which is held in place by a retainer 105 being held in place by a closure plate 103.

A thrust washer 104 is interposed between a stopper plate 34 and the bushing 100 at the opposite end 32a so as to complete the axial location of the valve shaft 32.

This invention may also be applied to such arrangements: One in which means for varying cross-sectional area of the exhaust duct comprising a valve is disposed in the middle of the exhaust duct to control exhaust gas pulsation, one in which a resonance box is connected in the middle of the exhaust duct and a valve is provided at the connecting position, one in which a cylinder head is provided with a small diameter communication hole and a decompression device is provided with a valve for opening the communication hole only at the starting time, one in which the exhaust duct is branched into a plural number of exhaust ducts each provided in its middle position with a valve to make the number of usable exhaust ducts variable according to operating conditions, and so on. By the way, in decompression devices, since exhaust gas enters from the combustion chamber into the communication hole during exhaust stroke, the communication hole is deemed as an exhaust passage described in the claims of this invention.

As is clear from the above description, this invention is applicable not only to the Diesel engine but also to the gasoline engine. It is also applicable to the four cycle engine as well as the two cycle engine.

According to a still further embodiment of the invention , since the housing is disposed in the middle of the exhaust gas passage which draws out exhaust gas from the combustion chamber, and the butterfly valve for varying the cross-sectional area of passage is disposed in the exhaust gas passage in the housing, and the shaft for supporting the butterfly valve for varying the cross-sectional area of passage is freely rotatably supported on the housing, sticking around the butterfly valve for varying the cross-sectional area of passage is minimized. Since the shaft for supporting the butterfly valve for varying the cross-sectional area of passage is made thin in diameter, the rotary drive torque is small even when tar-like substance or carbon enters around the shaft. The butterfly valve for varying the cross-sectional area of passage, even if tar-like substance or carbon adheres to it, the opening and closing operation of the butterfly valve for varying the cross-sectional area of passage is not affected, sticking is prevented, and the valve is driven accurately.

It should be readily apparent that the above described embodiments provide an exhaust control valve that inhibits valve sticking induced by combustion products accumulating on the surface of the valve and also provides an assembly that can be easily removed from the engine should servicing be required. Of course, the foregoing description is that of preferred embodiments of the invention, and various changes and modifications may be made without departing from the invention, as defined by the appended claims.

## Claims

1. An internal combustion engine (1) comprising at least one combustion chamber within an engine body (3), at least one exhaust gas passage (16b, 17b) for leading out exhaust gas from the combustion chamber and a control valve (31) accommodated in a housing (30) for controlling an exhaust gas flow and being a butterfly valve (31) provided with a valve shaft (32), said housing (30) having an exhaust gas hole (30a) being controlled by said butterfly valve (31),
**characterized in that** said housing (30) is disposed within said exhaust gas passage (16b, 17b) and within said engine body (3) and that the material of said housing (30) is different to the material of said engine body (3).

2. An internal combustion engine according to claim 1, **characterized in that** it comprises at least one sub-exhaust gas passage (17b) for leading out exhaust gas from the combustion chamber earlier than said exhaust gas passage (16b), said control valve (31) being disposed within said sub-exhaust gas passage (17b) for controlling the exhaust gas flow.

3. An internal combustion engine according to claim 2, **characterized in that** a housing (30) is disposed within said sub-exhaust gas passage (17b) for accommodating said butterfly valve (31), said housing (30) having an exhaust gas hole (30a) being controllable by said butterfly valve (31).

4. An internal combustion engine according to claim 1 or 3, **characterized in that** said housing (30) being composed of iron, iron based alloy or copper based alloy, respectively, and that said engine body (3) being composed of aluminium alloy.

5. An internal combustion engine according to at least one of claims 1, 3 or 4, **characterized in that** the height (A) of said exhaust gas hole (30a) is smaller than the overall height (C) of said butterfly valve (31) and that the thickness (t) of a butterfly portion (31a) of said butterfly valve (31) is smaller than the diameter (D3) of said valve shaft (32).

6. An internal combustion engine according to at least one of claims 1, 3 to 5, whereby said engine (1) comprises at least two cylinder bores (3a) arranged in a line and having respective combustion chambers which communicate with respective exhaust gas passages (17b), **characterized in that** each of said exhaust passages (17b) are provided with a respective housing (30) accommodating the respective butterfly valve (31) and that joint covers (40) are provided between respective housings (30).

7. An internal combustion engine according to at least one of claims 1, 3 to 5, whereby said engine (1) comprises at least two cylinder bores (3a) arranged in a line and having respective combustion chambers which communicate with respective exhaust gas passages (17b), **characterized in that** a single housing (30) is provided accommodating all respective butterfly valves (31).

8. An internal combustion engine according to claim 6 or 7, **characterized in that** each of said butterfly valves (31) are separately controllable or that all butterfly valves (31) are provided with a single shaft for simultaneously controlling all of said butterfly valves (31).

9. An internal combustion engine according to at least one of claims 1, 4 to 8 with claims 4 to 8 not dependent on claims 2 or 3, **characterized in that** said exhaust gas passage is a main exhaust gas passage (16b) or a sub-exhaust gas passage (17b).

10. An internal combustion engine according to at least one of claims 1 to 9, **characterized in that** said butterfly valve (31) or said butterfly valves (31), respectively, is or are controllable by an exhaust gas controller.

11. An internal combustion engine according to at least one of the claims 1 to 10, **characterized in that** said housing (30) being disposed in the middle of the exhaust passage or sub-exhaust gas passage (16b,17b), respectively.

12. An internal combustion engine according to at least one of the claims 1 to 11, **characterized in that** said valve shaft (32) supporting said butterfly valve (31) being provided with a small diameter.

## Patentansprüche

1. Eine Brennkraftmaschine (1), mit zumindest einer Verbrennungskammer innerhalb eines Motorkörpers (3), mindestens einem Abgaskanal (16b, 17b) zum Abführen von Abgas aus der Verbrennungskammer und einem Steuerventil (31), aufgenommen in einem Gehäuse (30) zur Steuerung einer Abgasströmung, ausgebildet als Drossenklappenventil (31) mit einer Ventilwelle (32), wobei das Gehäuse (30) eine durch das Drosselklappenventil (31) gesteuerte Abgasbohrung (30a) aufweist,
**dadurch gekennzeichnet, daß** das Gehäuse (30) innerhalb des Abgaskanales (16b, 17b) und innerhalb des Motorkörpers (3) angeordnet ist, und daß das Material des Gehäuses (30) verschieden von dem Material des Motorkörpers (3) ist.

2. Eine Brennkraftmaschine nach Anspruch 1, **dadurch gekennzeichnet, daß** sie mindestens einen Unter-Abgaskanal (17b) zum Herausführen von Abgas aus der Verbrennungskammer früher als aus dem Abgaskanal (16b) aufweist, wobei das Steuerventil (31) innerhalb des Unter-Abgaskanales (17b) zum Steuern der Abgasströmung angeordnet ist.

3. Eine Brennkraftmaschine nach Anspruch 2, **dadurch gekennzeichnet, daß** ein Gehäuse (30) innerhalb des Unter-Abgaskanales (17b) angeordnet ist, zum Aufnehmen des Drosselklappenventiles (31), wobei das Gehäuse (30) eine durch das Drosselklappenventil (31) steuerbare Abgasbohrung (30a) aufweist.

4. Eine Brennkraftmaschine nach Anspruch 1 oder 3, **dadurch gekennzeichnet, daß** das Gehäuse (30) jeweils aus Eisen, einer Eisenlegierung auf Eisenbasis oder einer Legierung auf Kupferbasis aufgebaut ist, und daß der Motorkörper (3) aus Aluminiumlegierung besteht.

5. Eine Brennkraftmaschine nach zumindest einem der Ansprüche 1, 3 oder 4 **dadurch gekennzeichnet, daß** die Höhe (A) der Abgasbohrung (30a) kleiner als die Gesamthöhe (C) des Drosselklappenventils (31), und daß die Dicke (t) eines Drosselklappenteiles (31 a) des Drosselklappenventiles (31) kleiner ist als der Durchmesser (D3) der Ventilwelle (32).

6. Eine Brennkraftmaschine nach zumindest einem der Ansprüche 1, 3 oder 5, wobei der Motor (1) mindestens zwei Zylinderbohrungen (3a), die in einer Reihe angeordnet sind und entsprechende Verbrennungskammem aufweisen, die mit jeweiligen Abgaskanälen (17b) verbunden sind, **dadurch gekennzeichnet, daß** jeder der Abgaskanäle (17b) mit einem entsprechenden Gehäuse (30) versehen ist, das das jeweilige Drosselklappenventil (31) aufnimmt und daß Verbindungsabdeckungen (40) zwischen den jeweiligen Gehäusen (30) vorgesehen sind.

7. Eine Brennkraftmaschine nach zumindest einem der Ansprüche 1, 3 oder 5, wobei der Motor (1) mindestens zwei Zylinderbohrungen (3a), die in einer Reihe angeordnet sind und entsprechende Verbrennungskammem aufweisen, die mit jeweiligen Abgaskanälen (17b) verbunden sind, **dadurch gekennzeichnet, daß** ein einziges Gehäuse (30) vorgesehen ist, das alle jeweiligen Drosselklappenventile (31) aufnimmt.

8. Eine Brennkraftmaschine nach Anspruch 6 oder 7, **dadurch gekennzeichnet, daß** jedes der Drosselklappenventile (31) getrennt steuerbar ist oder daß alle Drosselklappenventile (31) mit einer einzigen Welle zum gleichzeitigen Steuern aller Drosselklappenventile (31) versehen sind.

9. Eine Brennkraftmaschine nach zumindest einem der Ansprüche 1, 4 oder 8, wobei die Ansprüche 4 bis 8 nicht von den Ansprüchen 2 oder 3 abhängen, **dadurch gekennzeichnet, daß** der Abgaskanal ein Hauptabgaskanal (16b) oder ein Unter-Abgaskanal (17b) ist.

10. Eine Brennkraftmaschine nach zumindest einem der Ansprüche 1 bis 9, **dadurch gekennzeichnet, daß** jeweils das Drosselklappenventil (31) oder die Drosselklappenventile (31) durch eine Abgassteuereinrichtung steuerbar ist oder sind.

11. Eine Brennkraftmaschine nach zumindestens einem der Ansprüche 1 bis 10, **dadurch gekennzeichnet, daß** das Gehäuse (30) in der Mitte jeweils des Auslaßkanales oder der Unter-Abgaskanäle (16b, 17b) angeordnet ist.

12. Eine Brennkraftmaschine nach zumindest einem der Ansprüche 1 bis 11, **dadurch gekennzeichnet, daß** die Ventilwelle (32), die das Drosselklappenventil (31) lagert, mit einem kleinen Durchmesser versehen ist.

## Revendications

1. Moteur à combustion interne (1) comprenant au moins une chambre de combustion à l'intérieur d'un corps de moteur (3), au moins un passage de gaz d'échappement (16b, 17b) pour faire sortir le gaz d'échappement de la chambre de combustion et une soupape de commande (31) logée dans un carter (30) pour commander un flux de gaz d'échappement et qui est un clapet d'étranglement (31) doté d'un axe de soupape (32), ledit carter (30) ayant un trou de gaz d'échappement (30a) qui est commandé par ledit clapet d'étranglement (31), caractérisé en ce que ledit carter (30) est disposé à l'intérieur dudit passage de gaz d'échappement (16b, 17b) et à l'intérieur dudit corps de moteur (3) et en ce que la matière dudit carter (30) est différente de la matière dudit corps de moteur (3).

2. Moteur à combustion interne selon la revendication 1, caractérisé en ce qu'il comprend au moins un passage de gaz d'échappement secondaire (17b) pour faire sortir le gaz d'échappement de la chambre de combustion antérieurement audit passage de gaz d'échappement (16b), ladite soupape de commande (31) étant disposée à l'intérieur dudit passage de gaz d'échappement secondaire (17b) pour commander le flux de gaz d'échappement.

3. Moteur à combustion interne selon la revendication 2, caractérisé en ce qu'un carter (30) est disposé à l'intérieur dudit passage de gaz d'échappement secondaire (17b) pour loger ledit clapet d'étranglement (31), ledit carter (30) ayant un trou de gaz d'échappement (30a) pouvant être commandé par ledit clapet d'étranglement (31).

4. Moteur à combustion interne selon la revendication 1 ou 3, caractérisé en ce que ledit carter (30) est composé de fer, d'un alliage à base de fer ou d'un alliage à base de cuivre, respectivement, et en ce que ledit corps de moteur (3) est composé d'un alliage d'aluminium.

5. Moteur à combustion interne selon au moins l'une des revendications 1, 3 ou 4, caractérisé en ce que la hauteur (A) dudit trou de gaz d'échappement (30a) est inférieure à la hauteur globale (C) dudit clapet d'étranglement (31) et en ce que l'épaisseur (t) d'une partie à papillon (31a) dudit clapet d'étranglement (31) est inférieure au diamètre (D3) dudit axe de soupape (32).

6. Moteur à combustion interne selon au moins l'une des revendications 1, 3 à 5, par lequel ledit moteur (1) comprend au moins deux alésages de cylindre (3a) disposés en ligne et ayant des chambres de combustion respectives qui communiquent avec des passages de gaz d'échappement respectifs (17b), caractérisé en ce que chacun desdits passages d'échappement (17b) est doté d'un carter respectif (30) logeant le clapet d'étranglement respectif (31) et en ce que des cache-joints (40) sont prévus entre des carters respectifs (30).

7. Moteur à combustion interne selon au moins l'une des revendications 1, 3 à 5, par lequel ledit moteur (1) comprend au moins deux alésages de cylindre (3a) disposés en ligne et ayant des chambres de combustion respectives qui communiquent avec des passages de gaz d'échappement respectifs (17b), caractérisé en ce qu'un seul carter (30) est prévu qui loge tous les clapets d'étranglement respectifs (31).

8. Moteur à combustion interne selon la revendication 6 ou 7, caractérisé en ce que chacun desdits clapets d'étranglement (31) peut être commandé séparément ou en ce que tous les clapets d'étranglement (31) sont dotés d'un seul axe pour commander simultanément la totalité desdits clapets d'étranglement (31).

9. Moteur à combustion interne selon au moins l'une des revendications 1, 4 à 8, les revendications 4 à 8 ne dépendant pas des revendications 2 ou 3, caractérisé en ce que ledit passage de gaz d'échappement est un passage de gaz d'échappement principal (16b) ou un passage de gaz d'échappement secondaire (17b).

10. Moteur à combustion interne selon au moins l'une des revendications 1 à 9, caractérisé en ce que ledit clapet d'étranglement (31) ou lesdits clapets d'étranglement (31) respectivement, peut ou peuvent être commandé(s) par un dispositif de commande du gaz d'échappement.

11. Moteur à combustion interne selon au moins l'une des revendications 1 à 10, caractérisé en ce que ledit carter (30) est disposé au milieu du passage d'échappement ou du passage de gaz d'échappement secondaire (16b, 17b), respectivement.

12. Moteur à combustion interne selon au moins l'une des revendications 1 à 11, caractérisé en ce que ledit axe de soupape (32) supportant ledit clapet d'étranglement (31) est doté d'un petit diamètre.
